# EUROPEAN PATENT APPLICATION

(11) **EP 1 759 833 A1**
(43) Date of publication of application: **07.03.2007**
(21) Application number: 05255307.0
(22) Date of filing: 30.08.2005
(51) Int. Cl.: B32B 27/32

(54) **Film**

(71) Applicant: Borealis Technology Oy, 06101 Porvoo (FI)
(72) Inventor: Nilsen, Jorunn, 3930 Porsgrunn (NO); Kvamme, Lars Inge, 3970 Langesund (NO); Daviknes, Hans Georg, Stathelle (NO); Niedersüss, Peter, 4312 Ried/Riedmark (AT)
(74) Representative: Campbell, Neil Boyd

(57) **Abstract**

A multilayer film comprising at least three layers, two outer layers and a core layer, each outer layer independently comprising at least 50%wt of a mLLDPE component having a density of less than 940 kg/m³ and an LDPE component and said core layer comprising a polypropylene component and an mLLDPE component having a density of less than 940 kg/m³.

## Description

This invention relates to a multilayer film which can be formed into a laminate. The film has excellent mechanical properties whilst being remarkably thin. In particular, the invention concerns a multilayer film comprising a core layer of polypropylene and metallocene produced linear low density polyethylene (mLLDPE) with outer layers of mLLDPE and low density polyethylene (LDPE).

The use of films to form laminates is well known. Laminates are used widely in the packaging industry to form all manner of articles from food containers, to standing detergent pouches to product labels. These laminates are typically transparent and are formed when a film is coated onto a substrate. Films used in this fashion need to possess certain properties to be of use in the industry. The film needs excellent optical properties, i.e. low haze, so as to be sufficiently transparent. The film needs to possess high levels of gloss to give off the necessary aesthetic appearance. It should also be capable of being printed upon.

The film (which is conventionally multilayered) needs to adhere to the substrate on which it is placed and the layers of film also need to adhere to each other without themselves delaminating. Critically, the film needs to be stiff, e.g. possess a high tensile modulus, in order to be used successfully. Finally, the film must also be capable of being manufactured rapidly and cheaply. Since the margins on many packaging products are small, it is important that packaging costs are kept to a very minimum.

In this regard therefore, it is obvious that thinner films are preferred since such films will be cheaper to manufacture as they require less raw material. However, the down gauging of films (i.e. making them thinner) is typically associated with a considerable loss of stiffness. The resulting films are simply not stiff enough to be of use in laminates. If a film lacks stiffness, it will cause problems in the lamination process. Such a film may be too soft to adhere successfully to a substrate or may be too delicate to handle in the lamination apparatus. At present therefore, films made from polyethylene are often combined with HDPE in the core layer to improve stiffness. HDPE however gives lower transparency and is not therefore favourable. There is therefore a trade off between stiffness and transparency. At the moment therefore, polyethylene films for lamination are manufactured at around 85 to 100 microns in thickness. This is the thinnest they can be made without loss of stiffness/optical properties.

Laminates currently available on the market typically comprise trilayer films comprising LDPE in the outer layers and HDPE in the core layer. The LDPE is well known to improve the optical properties of films and HDPE provides strength and stiffness. Such films are however not possible to down gauge as the resulting film lacks sufficient stiffness for label applications. There remains therefore a need to devise alternative film formulations which can provide films of very low thickness whilst maintaining tensile modulus, optical properties like gloss and transparency and other mechanical properties.

The present inventors considered a number of potential solutions to this problem. They considered the use of polypropylene in the core layer of a multilayer film but experience suggests that delamination of the core layers and outer layers would be a major problem. Whilst LDPE might reduce the problem of delamination in such a composition, degradation may then become a serious issue due to the very different melting temperatures of LDPE and polypropylene. Moreover, if pure LDPE is employed in the outer layer, degradation become a serious issue when the core layer consist of polypropylene, due to the very different melting temperature between LDPE and PP. There is no overlap in processing temperatures for these materials.

It has now been surprisingly found that a particular multilayer film comprising at least three layers can fulfil the above requirements. The film comprises two outer layers which are preferably identical and comprise a metallocene LLDPE component and LDPE component and a core layer, i.e. a layer sandwiched between two outer layers, comprising a polypropylene homo or copolymer and a mLLDPE component. It has been found that the presence of the mLLDPE component in the core layer prevents delamination from the outer layers. Also, the use mLLDPE polymer ensures there is overlap in the processing window of the core layer polymers. The mLLDPE/LDPE mixture employed in the outer layer improves haze whilst the mLLDPE again ensures excellent internal adhesiveness as well as providing adhesion to an external surface. Finally, the polypropylene provides stiffness to the film. The film of the invention is also useful at very narrow film thicknesses.

Thus, viewed from one aspect, the invention provides a multilayer film comprising at least three layers, two outer layers and a core layer, each outer layer independently comprising at least 50%wt of a mLLDPE component having a density of less than 940 kg/m³ and an LDPE component and said core layer comprising a polypropylene component and an mLLDPE component having a density of less than 940 kg/m³.

Viewed from another aspect the invention provides a process for the preparation of a multilayer film as hereinbefore described comprising coextruding at least 50%wt of a mLLDPE component having a density of less than 940 kg/m³ and a LDPE component to form two outer layers and a polypropylene component and an mLLDPE component having a density of less than 940 kg/m³ to form a core layer.

Viewed from another aspect the invention provides use of a multilayer film as hereinbefore described in packaging.

Viewed from another aspect the invention provides a laminate comprising a film as hereinbefore described coated onto a substrate.

The multilayer film of the invention has at least three layers, e.g. 3, 5, 7 or 11 layers. Preferably however the film should comprise only three layers, two outer layers and a core layer. By core layer is meant a non outer layer, i.e. the core layer is not on the surface of the formed film but is sandwiched between the outer layers.

The outer layers may have differing compositions although preferably the outer layers should be identical. At least one of the outer layers acts as a surface layer and should therefore be glossy and haze free. It may also carry a logo, instructions for use of the product, ingredient list etc. Typically however, the film layer which is printed upon is the layer which is laminated. Any layer which is printed upon may need corona treatment to allow adhesion of the necessary dye as is known in the art.

The other outer layer may be laminated onto a substrate such as paper, aluminium foil, other polymer substrates such as BOPP etc. This can be achieved using any conventional adhesive. Suitable adhesives are known in the art.

The outer layers comprise a metallocene produced linear low density polyethylene (mLLDPE) component having a density of less than 940 kg/m³, and a low density polyethylene component made in a high pressure radical process.

The mLLDPE may be bimodal but is preferably unimodal. By unimodal is meant that the molecular weight profile of the polymer comprises a single peak.

The mLLDPE's of use in the outer layer should preferably form at least 50% by weight, e.g. at least 60% wt, preferably at least 75 %wt of each outer layer.

The mLLDPE of use in the outer layers may have a density of less than 940 kg/m³, e.g. 905-940 kg/m³, preferably in the range of from 915 to 934 kg/m³, e.g. 920 to 930 kg/m³ (ISO 1183).

The mLLDPE of the outer layers is formed from ethylene along with at least one C₃₋₁₂ alpha-olefin comonomer, e.g. 1-butene, 1-hexene or 1-octene. Preferably, the mLLDPE is an ethylene hexene copolymer, ethylene octene copolymer or ethylene butene copolymer. The amount of comonomer incorporated is preferably 2 to 10 wt% relative to ethylene, especially 4 to 8 wt%.

The MFR₂ (melt flow rate ISO 1133 at 190°C under a load of 2.16 kg) of the mLLDPE should preferably be in the range 0.5 to 10, preferably 0.8 to 6.0, e.g. 0.9 to 2.0 g/10min.

The mLLDPE should preferably have a weight average molecular weight (Mw) of 100,000-250,000, e.g. 110,000-160,000 (GPC). The Mw/Mn (MWD) value should preferably be 2 to 20, e.g. 2.0 to 4.0, preferably 3.0 to 3.5 (GPC).

The mLLDPE is manufactured using well known polymerisation chemistry e.g. as described in numerous earlier patent applications. The polymerisation can be effected in solution, slurry or gas phase under standard conditions using a wide variety of different metallocene catalysts and cocatalysts. Metallocene produced LLDPE's are readily distinguishable from Ziegler-Natta produced LLDPE's. These catalysts give rise to very different properties in the polymer (e.g. different molecular weight distributions, comonomer incorporation, composition distribution index, branching properties etc). Metallocenes of use include alkylsubstituted bis cyclopentadienyl and indenyl complexes often employed with methyl aluminoxane as cocatalyst.

Suitable mLLDPE's are available commercially from Borealis and other suppliers.

The outer layers of the multilayer film of the invention also comprise LDPE. LDPE is an ethylene homopolymer and is a prepared using a well-known high pressure radical process as will be known to the skilled man. The skilled polymer chemist appreciates that LDPE is a term of the art.

The amount of LDPE present may range from 3 to 50% wt, e.g. 10 to 40% by weight, preferably 15 to 30 wt% of the outer layer in question. The LDPE may have a density of 915-935 kg/m³, especially 920-930 kg/m³. The MFR₂ of the LDPE may range from 0.3 to 4 g/10min, e.g. 0.5 to 2.5 g/10 min, e.g. 1.0 to 2.0 g/10 min.

Suitable LDPE's are available commercially from Borealis and other suppliers.

The outer layer may also contain minor amounts of conventional additives such as antioxidants, UV stabilisers, acid scavengers, nucleating agents, anti-blocking agents etc. Especially preferably, the outer layers comprise polymer processing additive (PPA). PPA's are typically used at very low levels to improve processing of thermoplastics. They are especially important when metallocene produced polymers are employed as such polymers tend to have poorer processability than Ziegler-Natta produced materials.

A preferred PPA is a fluoropolymer, e.g. as available from Dyneon as FX 5922. This can be added to the outer layer components directly to a level of approximately 20 ppm (wt) to 2000 ppm, preferably 100 to 500 ppm. Alternatively, it can be added to the outer layer blend as part of a masterbatch such that the above level is again present.

The core layer of the multilayer film of the invention must comprise a polypropylene component and a mLLDPE component. The mLLDPE component may be as described above in connection with the outer layers.

The polypropylene component may be a copolymer or homopolymer of propylene. If it is a copolymer it may be a random or heterophasic (i.e. block) copolymer. The comonomer may be ethylene or a higher comonomer, e.g. a C₄₋₁₂ alpha olefin, although ethylene is preferred. The amount of comonomer incorporated is preferably 1 to 20 wt%, especially 2 to 10 wt%.

Most preferably however, the polypropylene is a homopolymer.

The amount of polypropylene in the core layer should be at least 50% by weight, e.g. at least 60% wt, preferably at least 70 %wt of the core layer, especially at least 80 wt% of the core layer.

Its MFR may range from 0.1 to 5 g/10 min, e.g. 0.2 to 3 g/10min.

The mLLDPE can form up to 50 wt%, e.g. up to 40 wt% preferably up to 30 wt%, especially up to 20 wt% of the core layer.

The core layer may also comprise conventional additives such as antioxidants, UV stabilisers, acid scavengers, nucleating agents, anti-blocking agents etc as well as polymer processing agent (PPA). As above, the amounts of PPA used may be in the range 0.01 to 1% wt and can be added to the core layer directly or as part of a masterbatch.

Polypropylenes of use in the invention can be manufactured using well known commercial processes and catalysts, e.g. Ziegler-Natta catalysts. Suitable polypropylene polymers are commercially available from Borealis and other suppliers.

The films of the invention may have a thickness of 20 to 100 microns, e.g. 40 to 80 microns, preferably 50 to 75 microns. Most especially, the films are less than 80 microns in thickness, e.g. less than 75 microns in thickness, such as less than 70 microns in thickness, e.g. about 60 microns in thickness. The ability to use such narrow films in the formation of laminates is an important aspect of the invention.

The outer layers and core layer may all be of equal thickness. Alternatively the core layer may be thicker than each outer layer or outer layers thicker than the core layer. A convenient film comprises two outer layers which each form 15 to 35% of the thickness of the film, the core layer forming the remaining thickness, e.g. 30 to 70%.

Since each layer of the film uses a polymer mixture, it is important that the different polymer components be intimately mixed prior to extrusion and blowing of the film as otherwise there is a risk of inhomogeneities, e.g. gels, appearing in the film.

The film of the invention will typically be produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the outer and core layer mixtures will be coextruded at a temperature in the range 160°C to 240°C, and cooled by blowing gas (generally air) at a temperature of 10 to 50°C to provide a frost line height of 1 to 8 times the diameter of the die. The blow up ratio should generally be in the range 1.5 to 4, preferably 2.5 to 3.

The films of the invention exhibit high tensile modulus properties (0.05-1.05%) (ASTM D882) in the machine/transverse direction. These should be at least 750 MPa/700 MPa, especially at least 780/740 MPa.

The films may have high strain at break in both machine and transverse directions, e.g. at least 600% (MD/TD).

The films may also have high tensile strength in both machine and transverse directions e.g. at least 32/35 MPa (MD/TD).

The films are of very low haze, e.g. less than 15%, preferably less than 10%. They also possess excellent gloss, e.g. at least 75, preferably at least 100.

The films of the invention have a wide variety of applications but are of particular interest as lamination films for packaging of food and drink, consumer and industrial goods, stand up pouches, labels etc.

Lamination of the films of the invention to a substrate can be effected using well known conditions and adhesives. Thus, a coextruded multilayer film can be glued onto a substrate such as paper, biaxially oriented polypropylene etc in a laminating device.

The films of the invention exhibit various further advantageous properties. They show improved optical properties over films in which a pure mLLDPE is used in the outer layers and pure PP is used in the core layers. The preferred mLLDPE's of the invention have quite broad molecular weight distribution which improves processability and optical properties relative to grades with narrower MWD. The combination of mLLDPE and PP in the core layer improves slip migration versus blends in which the core layer comprises PP only.

The presence of LDPE in the outer layers improves punchability. The present of mLLDPE in the core layer also improves printablilty.

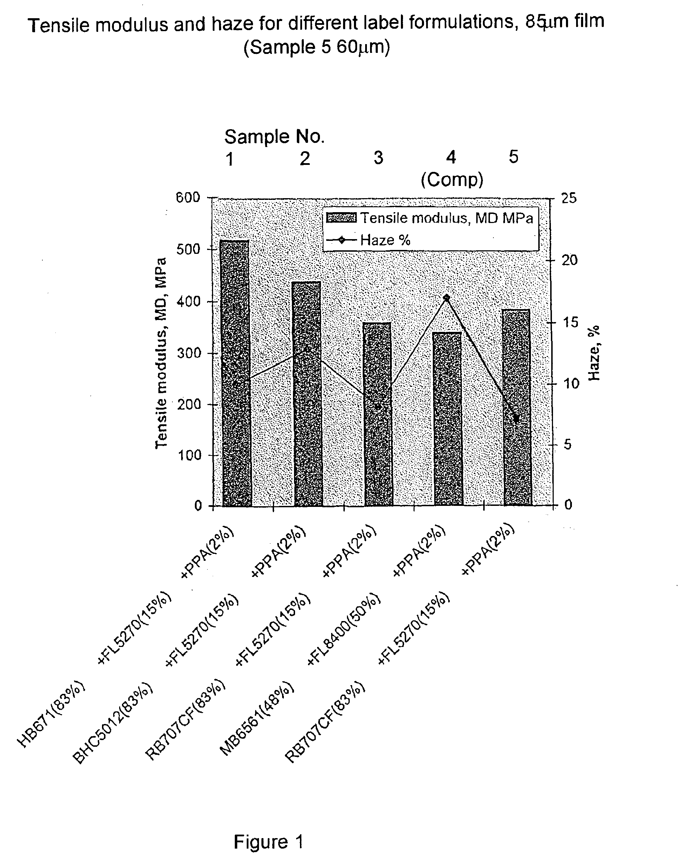

The invention will now be described further with reference to the following non-limiting examples and Figure. Figure 1 plots the tensile moduli and haze properties of films 1 to 5.

### Analytical Tests

Density is measured according to ISO 1183

MFR₂ is measured according to ISO 1133 at 190°C (for polyethylene) or 230°C (for Polypropylene) at loads of 2.16 .

MFR₂₁ is measured according to ISO 1133 at 190°C at loads of 21.6 kg.

Mw/Mn/MWD are measured by GPC accodring to the following method:
The weight average molecular weight Mw and the molecular weight distribution (MWD = Mw/Mn wherein Mn is the number average molecular weight and Mw is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: 9.54*10⁻⁵ and a: 0.725 for PS, and K: 3.92*10⁻⁴ and a: 0.725 for PE)

Tensile modulus is measured according to ASTM D 882-A

Tensile Strain at break and tensile strength are measured according to ISO 527-3

Haze is measured according to ASTM D 1003. Gloss is measured according to ASTM D 2457.

### Example 1

The following grades were employed in the manufacture of films:

**Table 1**

| Grade | Polymer type | Density | MFR2 |
|---|---|---|---|
| A | unimodal mLLDPE | 927 | 1.3 |
| D | HDPE | 956 | 1.5 |
| E | PP random copolymer | 900-910 | 1.5 |
| F | PP heterophasic copolymer | 900-910 | 0.3 |
| G | PP homopolymer | 905 | 2.0 |
| H | LDPE | 927 | 0.75 |
| J | Unimodal mLLDPE | 940 | 6.0 |
| K | unimodal mLLDPE | 934 | 1.3 |

The films were prepared by film blowing at BUR (Blow Up Ratio) 3:1, temperature profile 190-225°C and die gap of 1.2 mm.

All films are 3 layered, the film distribution being 20%:60%:20%. The outer layer in each film is identical. The prepared films are described in Table 2.

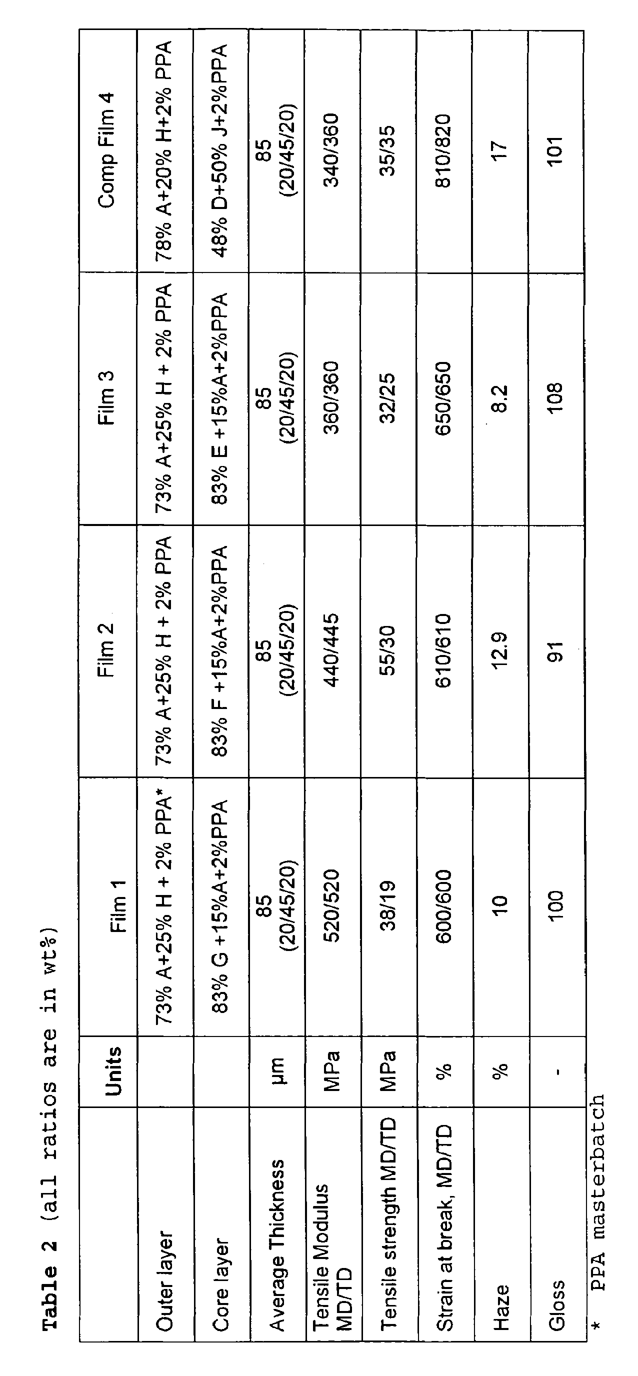

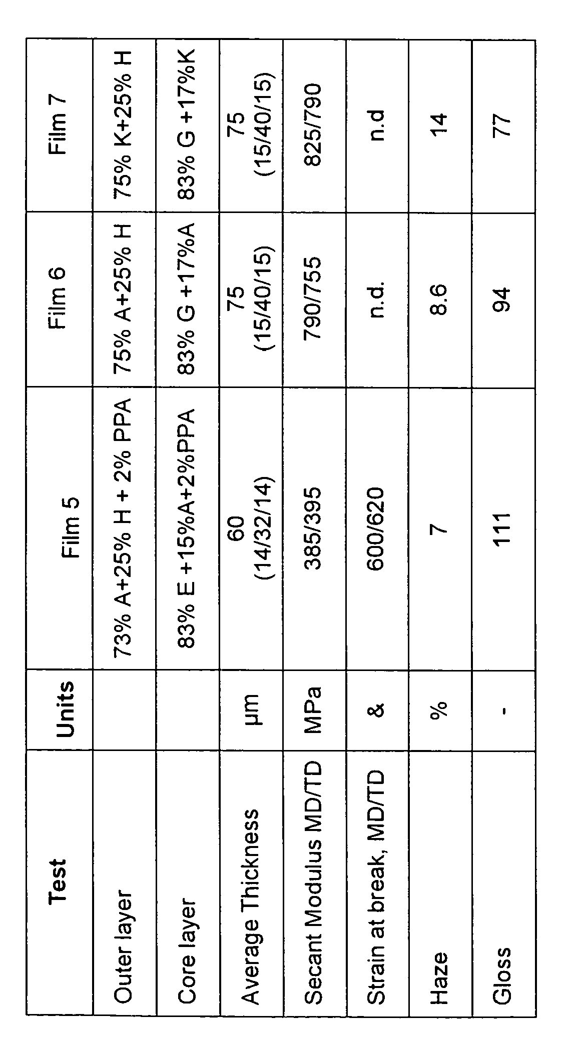

The Haze and tensile modulus properties of films 1 to 5 are shown in Figure 1. It will be noted that Film 5 and Film 3 are made from the same material. Film 5, despite being much thinner, exhibits improved performance. Moreover, the combination of high tensile modulus and low haze is shown for the films of the invention.

## Claims

1. A multilayer film comprising at least three layers, two outer layers and a core layer, each outer layer independently comprising at least 50%wt of a mLLDPE component having a density of less than 940 kg/m³ and an LDPE component and said core layer comprising a polypropylene component and an mLLDPE component having a density of less than 940 kg/m³.

2. A film as claimed in claim 1 having a thickness of less than 80 microns.

3. A process for the preparation of a multilayer film as hereinbefore described comprising coextruding at least 50%wt of a mLLDPE component having a density of less than 940 kg/m³ and a LDPE component to form two outer layers and a polypropylene component and an mLLDPE component having a density of less than 940 kg/m³ to form a core layer.

4. A laminate comprising the film of claim 1.

5. Use of a multilayer film as hereinbefore described in packaging.
